# EUROPÄISCHE PATENTSCHRIFT

(11) **EP 2 836 333 B1**
(45) Veröffentlichungstag und Bekanntmachung des Hinweises auf die Patenterteilung: **27.09.2017**
(21) Anmeldenummer: 13721588.5
(22) Anmeldetag: 10.04.2013
(51) Int. Cl.: B23K 26/70, B23K 37/00, F16P 1/02, F16P 1/06, F16P 3/00, H01L 23/498

(54) **LASERSCHUTZVORRICHTUNG ZUM ERFASSEN VON LASERSTRAHLUNG IN DER FORM EINES FLEXIBLEN VORHANGELEMENTES**
LASER PROTECTION DEVICE IN THE SHAPE OF A FLEXIBLE CURTAIN-TYPE ELEMENT FOR DETECTING LASER RADIATION
DISPOSITIF DE PROTECTION ANTI-LASER SOUS LA FORME D'UN ÉLÉMENT DE TYPE RIDEAU FLEXIBLE POUR DÉTECTER UN RAYONNEMENT LASER

(30) Priorität: 13.04.2012 DE 102012103185; 12.07.2012 DE 102012106278
(43) Veröffentlichungstag der Anmeldung: 18.02.2015
(73) Patentinhaber: Scansonic MI GmbH, 12681 Berlin (DE)
(72) Erfinder: HASCHKE, Igor, 10437 Berlin (DE); RÖSLER, Carsten, 10318 Berlin (DE); SIEVI, Pravin, 10365 Berlin (DE)
(74) Vertreter: Kaufmann, Sigfrid
(86) Internationale Anmeldenummer: PCT/DE2013/100130
(87) Internationale Veröffentlichungsnummer: WO 2013/152760

(56) Entgegenhaltungen:
- WO-A1-2010/146524
- DE-A1-102006 003 450
- DE-B3-102010 042 564
- GB-A- 2 186 970
- JP-A- 2005 259 984
- US-A1- 2011 260 737

## Beschreibung

Die Erfindung betrifft eine Laserschutzvorrichtung zum Erfassen von Laserstrahlung gemäß dem Oberbegriff des Anspruchs 1 (siehe, z.B., DE10 2006 003 450 A1), insbesondere eine Laserschutzvorrichtung mit einer Anordnung zur Erfassung von unzulässig starkem Energieeintrag in das Material einer Schutzumhüllung durch direkte Laserstrahlung.

In vielen Bereichen - z. B. in der Industrie zur Materialbearbeitung oder in der Forschung - werden Laser eingesetzt, wobei der Verlauf des Laserstrahls oftmals bewegbar geführt ist, z. B. indem der Laserstrahl über bewegbare Umlenkspiegel geleitet wird oder indem ein den Laserstrahl emittierender Laserkopf an einem bewegbaren Roboterarm angebracht ist. Licht des Laserstrahls kann dabei z. B. durch Reflexion oder Streuung an einem zu bearbeitenden Werkstück oder an Teilen der Laservorrichtung umgelenkt werden kann. Um eine Gefährdung von Personen durch (z. B. derart umgelenktes) Laserlicht zu vermeiden, werden solche Laservorrichtungen daher in der Regel in einer Sicherheits- bzw. Schutzkabine betrieben, welche ein Abschirmen der Umgebung vor der Laserstrahlung gewährleistet. Im einfachsten Fall kann eine solche Sicherheitskabine aus passiv wirkenden starren Schutz- bzw. Abschirmwänden bestehen, welche z. B. aus Metall sein können und derart angeordnet sind, dass von ihnen die Laservorrichtung bzw. der Laser nach außen hin lichtdicht abgeschirmt wird. Solche passiven Schutzwände wirken, indem sie die darauf auftreffende Laserstrahlung absorbieren oder reflektieren.

Es können auch aktiv wirkende Sicherheitskabinen vorgesehen sein. Als Beispiel hierfür beschreibt die DE 20 2009 004 927 U1 eine Laserschutzkabine mit einer Umfangswandung aus doppelwandigen Wandungselementen mit einer Innenwand und einer zu dieser beabstandeten Außenwand, wobei ein Sensor zur Detektierung von Laserlicht an einer vorgegebenen Position im Zwischenraum zwischen den beiden Wänden angeordnet ist. Gemäß dieser Anordnung kann die bei Laserdurchbruch am Sensor vorliegende Lichtintensität und somit auch das von derselben am Sensor hervorgerufene Signal mit der Position des Laserauftreffpunktes variieren. Des Weiteren sind die beschriebenen doppelwandigen Wandungselemente nicht für verformbare Elemente einer Laserschutzkabine, wie z. B. Rolltore bzw. Rolltüren, geeignet.

Die beschriebenen Laserschutzkabinen mit starren Wandungselementen müssen zudem, um (z. B. zu Reparatur-, Umbau- oder Justierzwecken) einen allseitigen Zugang zu den in ihnen aufgenommenen Laservorrichtungen zu ermöglichen, eine wesentlich größere Standfläche aufweisen als die jeweils umhauste Laservorrichtung. Zudem sind solche Schutzkabinen hinsichtlich ihrer Größe bzw. des von ihnen umhausten Raumvolumens allenfalls beschränkt variierbar und ihr Auf-, Ab- oder Umbau erfordert einen erheblichen Arbeitsaufwand.
Der Erfindung liegt die Aufgabe zugrunde, eine Laserschutzvorrichtung zum Erfassen von Laserstrahlung bereitzustellen, die variabel einsetzbar ist und mittels derer bei einer platzsparenden Anordnung ein ungewolltes Austreten von Laserstrahlung aus einem Arbeitsbereich einer Laservorrichtung zuverlässig erfassbar ist. Eine Laserschutzvorrichtung zum Erfassen von Laserstrahlung gemäß der Erfindung ist in Anspruch 1 definiert. Der Energieeintrag durch Auftreffen der Laserstrahlung auf das Vorhangelement in die Sensor-Schichtanordnung erfolgt durch die direkte Wechselwirkung der Photonen des Laserlichts mit dem Material einer Schicht der Schichtanordnung mittels Photoeffekts. Unter dem "Erfassen von Laserstrahlung" wird vorliegend das Erfassen von gewollt oder ungewollt (z. B. durch Streuung oder Reflexion von einer mittels des Vorhangelements abgeschotteten Laserbearbeitungsvorrichtung her) auf das Vorhangelement auftreffender gebündelter oder ungebündelter, sichtbarer oder nicht sichtbarer elektromagnetischer Strahlung verstanden; wobei insbesondere das von einer zu überwachenden Laservorrichtung emittierte Laserlicht erfasst werden soll.
Das flexible (d. h. flexibel verformbare) Vorhangelement weist eine Innenseite, d. h. eine zum Auftreffen von Laserstrahlung darauf vorgesehene (beim bestimmungsgemäßen Betrieb der die Laserstrahlung emittierenden Lichtquelle zugewandte) Seite, und eine derselben abgewandte Außenseite, d. h. eine der Laserlichtquelle abgewandte Seite, auf. Die Sensor-Schichtanordnung erstreckt sich bevorzugt über die gesamte Fläche bzw. Vorhang-Fläche des Vorhangelements (z. B. über die gesamte Fläche der Innenseite des Vorhangelements) bzw. nimmt dieselbe ein, wobei sich insbesondere jede der Schichten der Sensor-Schichtanordnung über die gesamte Fläche des Vorhangelements (z. B. über die gesamte Fläche der Innenseite des Vorhangelements) erstrecken bzw. dieselbe einnehmen kann. Demgemäß ist die Sensor-Schichtanord-nung als großflächiges Sensorelement ausgeführt, das üblicherweise eine mehrere Quadratmeter große Fläche, jedoch bevorzugt bei ein Laserschutzkabine mindestens eine 0,25 m² und bei einem Gehäuse mind. 0,05 m² große Fläche, umfasst bzw. einnimmt. Das Vorhangelement kann auch von der Sensor-Schichtanordnung gebildet sein, d. h. aus der Sensor-Schichtanordnung bestehen. In jedem Fall kann die gesamte Fläche des Vorhangelements von der Sensor-Schichtanordnung (flächig) über- bzw. abgedeckt sein.
Indem das Vorhangelement entlang seiner (gesamten) Fläche die Sensor-Schichtanordnung aufweist, kann das bei auftreffendem Laserlicht in Form der Änderung der elektrischen Kenngröße der Sensor-Schichtanordnung hervorgerufene Signal unabhängig von der Position des Auftreffpunktes des Laserlichts auf dem Vorhangelement sein, wodurch ein zuverlässiges Erfassen des Auftreffens von Laserstrahlung ermöglicht ist. Zudem kann ein solches Vorhangelement in seiner Größe auf einfache Art und Weise variiert (und z. B. an die Größe einer zu überwachenden Laservorrichtung angepasst) und mit einem (gegenüber starren Abschirmwandungen) geringen Gewicht ausgebildet werden und somit eine einfache Handhabung ermöglichen.

Das Vorhangelement kann z. B. ein Teil einer Schutzumhüllung zum Umhüllen einer Laservorrichtung (z. B. einer Laserbearbeitungsvorrichtung zum Bearbeiten eines Werkstücks mittels der Laserstrahlung) sein oder eine solche Umhüllung bilden. Es kann auch vorgesehen sein, vorhandene (z. B. passive) Schutzvorhänge nachträglich mit der beschriebenen Sensor-Schichtanordnung nachzurüsten, z. B. mittels Aufbringens einer Sensor-Schichtanordnung - etwa in Form einer vorgefertigten (ggf. mehrlagigen) Folie - auf die Innenseite eines passiven Schutzvorhangs.

Es kann vorgesehen sein, das Vorhangelement als (für sichtbares Licht) intransparentes bzw. lichtundurchlässiges Vorhangelement auszubilden, z. B. indem das Vorhangelement mindestens eine für sichtbares Licht undurchlässige Lage aufweist. Es kann auch vorgesehen sein, das Vorhangelement als (für sichtbares Licht) transparentes bzw. lichtdurchlässiges Vorhangelement auszubilden, z. B. indem das Vorhangelement ausschließlich aus für sichtbares Licht transparenten Materialien bzw. Lagen besteht. Es kann zudem vorgesehen sein, das Vorhangelement derart auszubilden, dass es für das Licht bzw. die Wellenlänge der Laserstrahlung intransparent bzw. undurchlässig ist. In diesem Fall kann das Vorhangelement zugleich als Abschirmelement zum Abschirmen der Laserstrahlung fungieren.

Das Vorhangelement kann insbesondere derart ausgebildet sein, dass es für die (Wellenlänge der) Laserstrahlung undurchlässig ist und zumindest für einen Teil des sichtbaren Lichtspektrums durchlässig ist; in diesem Fall kann mittels des Vorhangelements ein Abschirmen der Laserstrahlung bei gleichzeitiger Einsehbarkeit einer mittels des Vorhangelements abgeschirmten Laservorrichtung ermöglicht sein. Zu diesem Zweck kann das Vorhangelement z. B. ein optisches Filter aufweisen, das die gesamte Fläche des Vorhangelements überdeckt und derart ausgebildet ist, dass von ihm zumindest ein Teil des sichtbaren Lichts transmittiert wird und die Wellenlänge der Laserstrahlung herausgefiltert und nicht transmittiert wird. Das Filter kann z. B. in Form eines Interferenzfilters ausgeführt sein, z. B. in Form eines dielektrischen Interferenzfilters aus mehreren dielektrischen Folien; wobei das Interferenzfilter auf der laserabgewandten Seite der Sensor-Schichtanordnung (d. h. im Lichtweg von auf das Vorhangelement auftreffendem Laserlicht hinter der Sensor-Schichtanordnung) angeordnet ist, sodass die Laserstrahlung zunächst die Sensor-Schichtanordnung durchläuft und dann auf das Filter trifft. Da ein Interferenzfilter Strahlung der herauszufilternden Wellenlänge reflektiert, kann mittels eines solchen Filters zudem die darauf auftreffende Laserstrahlung nochmals auf die Sensor-Schichtanordnung gelenkt werden und zum Auslösen dieses Sensorelements beitragen.

Die Sensor-Schichtanordnung ist eine als Sensorelement fungierende Schichtanordnung, die aus einer einzigen Schicht oder aus mehreren (in einem Abstand zueinander oder einander kontaktierend übereinander angeordneten) Schichten besteht, wobei jede dieser Schichten z. B. aus einem elektrisch leitfähigen (z. B. einem Metall wie etwa Kupfer oder Eisen), elektrisch halbleitenden (z. B. einem Halbleiter wie etwa Silizium) oder elektrisch isolierenden (z. B. einem Dielektrikum wie etwa einer Keramik) Material bestehen kann. Die Sensor-Schichtanordnung bildet sozusagen ein elektrisches Bauteil bzw. einen Teil eines Sensors zum Erfassen einer elektrischen Kenngröße, welche sich bei Energieeintrag (z. B. Erwärmung) durch die Laserstrahlung über einen kritischen Wert hinaus signifikant ändert. Die Schichten bzw. Materialschichten der Sensor-Schichtanordnung können z. B. jeweils (mit einer entsprechend geringen Schichtdicke) als flexibel verformbare Folien ausgebildet sein.

Die elektrischen Eigenschaften der einzelnen Schichten und die Geometrie der Anordnung der Schichten bestimmen die elektrischen Eigenschaften der Sensor-Schichtanordnung, wobei der Begriff elektrische Eigenschaften" hier jegliche zur elektrischen Leitfähigkeit, der Sensor-Schichtanordnung umfasst. Diese elektrische Leitfähigkeit kann mittels geeigneter elektrischer Kontaktierung der Sensor-Schichtanordnung in dem Fachmann bekannter Art und Weise ermittelt und überwacht werden. Die Sensor-Schichtanordnung ist derart ausgebildet, dass sich ihre elektrischen Eigenschaften bei Energieeintrag (z. B. Erwärmung) durch auf das Vorhangelement auftreffende Laserstrahlung ändern.
Gemäß einer Ausführungsform weist die Laserschutzvorrichtung ferner eine Überwachungsvorrichtung auf, die mit der Sensor-Schichtanordnung elektrisch verbunden ist und derart ausgebildet ist, dass von ihr eine solche Änderung der elektrischen Eigenschaften bzw. der elektrischen Kenngröße der Sensor-Schichtanordnung (als Mess-wert) erfassbar ist. Die Überwachungsvorrichtung kann ferner derart ausgebildet sein, dass von ihr ein (elektrisches, akustisches oder optisches) Signal erzeugt und abgegeben wird, wenn der Betrag der erfassten Änderung einen vorgegebenen Schwellenwert überschreitet.

Die Überwachungsvorrichtung kann z. B. derart eingerichtet sein, dass von ihr die Änderung der elektrischen Eigenschaften der Sensor-Schichtanordnung mittels Vergleichs eines momentan vorliegenden Ist-Werts einer elektrischen Kenngröße der Sensor-Schichtanordnung mit einem vorgegebenen Soll-Wert dieser elektrischen Kenngröße erfolgt, wobei die Änderung z. B. in Form des Betrages der Differenz zwischen dem Ist-Wert und dem Soll-Wert erfasst werden kann. Der Soll-Wert kann z. B. dem Wert der elektrischen Kenngröße bei ausgeschaltetem Laser entsprechen. Die Überwachungsvorrichtung kann ferner derart ausgebildet sein, dass von ihr die momentan vorliegenden elektrischen Eigenschaften bzw. Kenngrößen der Sensor-Schichtanordnung mittels Beaufschlagens der Sensor-Schichtanordnung mit einem elektrischen Eingangssignal (z. B. in Form einer elektrischen Spannung oder eines elektrischen Stroms) und Empfangens und Auswertens des daraus resultierenden Antwortsignals erfassbar ist.

Gemäß einer Ausführungsform ist die Überwachungsvorrichtung ferner mit dem die Laserstrahlung emittierenden Laser elektrisch verbunden und derart eingerichtet, dass von ihr der Laser ausgeschaltet wird, sobald der Betrag der erfassten Änderung der elektrischen Kenngröße - z. B. der Betrag der Differenz zwischen dem Ist-Wert und dem Soll-Wert der elektrischen Kenngröße - der Sensor-Schichtanordnung größer ist als ein vorgegebener Schwellenwert. Zum Beispiel kann die Überwachungsvorrichtung über Anbindung an einen vorhandenen Sicherheitskreis des Lasers bzw. der Laservorrichtung mittelbar mit dem Laser verbunden sein.

Gemäß einer Ausführungsform ist das Vorhangelement in Form eines nach allen seitlichen Richtungen hin und/oder nach oben hin geschlossenen sowie nach unten hin offenen Zeltes bzw. Einhüllung ausgebildet; wobei das Zelt z. B. mittels einer Abspannung und/oder einer Tragkonstruktion (z. B. eines Gestänges) in seiner Form gehalten sein kann. Gemäß dieser Ausführungsform kann das Vorhangelement nach Art eines Zeltes über eine Laservorrichtung gestülpt angeordnet werden, wobei die Laservorrichtung von dem Vorhangelement zuverlässig nach allen offenen Seiten hin umhüllt und auf das Austreten von Laserstrahlung überwacht werden kann.

Es kann jedoch auch vorgesehen sein, das Vorhangelement z. B. in Form einer Rolltür zum Verschließen einer Zugangsöffnung einer ansonsten aus starren Wandungselementen bestehenden Laserschutzkabine vorzusehen. Des Weiteren kann vorgesehen sein, dass das Vorhangelement ein aufrollbares Tor ist oder aus einer Anordnung mehrerer aufrollbarer Wände besteht.

Das Vorhangselement kann auch insgesamt aufblasbar sein bzw. über aufblasbare Stützelemente verfügen, um es in Form zu halten und/oder um es aufzurichten bzw. abzusenken.

Gemäß einer weiteren Ausführungsform weist die Laserschutzvorrichtung eine Hebevorrichtung zum Anheben und Absenken des Vorhangelements auf; wobei z. B. vorgesehen sein kann, das Vorhangelement ohne eine Verformung desselben in seiner Gesamtheit anzuheben. Gemäß dieser Ausführungsform kann auf einfache Art und Weise ein Zugang und Zugriff zu einer mittels des Vorhangelements umhüllten und überwachten Laservorrichtung ermöglicht sein, indem das Vorhangelement bei Bedarf einfach nach oben hin angehoben und somit aus dem Zugangsweg entfernt wird. Zudem kann gemäß dieser Ausführung eine raumeffiziente Umhüllung einer Laservorrichtung bei zugleich einfach realisierbarem allseitigen Zugang zu der Laservorrichtung ermöglicht sein, z. B. indem das Vorhangelement in Form eines nach unten hin offenen Zeltes ausgebildet ist und zum Ermöglichen des Zugangs zu einer von dem Zelt umhüllten Laservorrichtung in seiner Gesamtheit nach oben hin angehoben wird; wobei die von dem zeltartigen Vorhangelement überdeckte Fläche im Wesentlichen der Standfläche der überdeckten Laservorrichtung entsprechen kann und nicht wesentlich größer als diese sein muss.

Gemäß einer anderen Ausführungsform weist die Laserschutzvorrichtung eine Aufrollvorrichtung zum Auf- und Abrollen des Vorhangelements auf. Gemäß dieser Ausführungsform kann das Vorhangelement analog zu der oben mit Bezug auf die Hebevorrichtung beschriebenen Ausführungsform bei raumeffizienter Anordnung auf einfache Art und Weise einen (allseitigen) Zugang zu einer mittels des Vorhangelements überwachten Laservorrichtung ermöglichen, indem das Vorhangelement zum Ermöglichen des Zugangs zu der Laservorrichtung aufgerollt und somit aus dem Zugangsweg entfernt wird. Es kann z. B. vorgesehen sein, das Vorhangelement in Form eines auf einer angetriebenen Welle aufrollbaren Schutzvorhangs auszuführen, der bei Laserbetrieb abgerollt und somit abgesenkt wird.

Gemäß einer Ausführungsform ist die Sensor-Schichtanordnung derart ausgebildet, dass die Änderung der elektrischen Kenngröße der Sensor-Schichtanordnung mittels einer (durch den Energieeintrag durch Laserlicht hervorgerufenen) Änderung der elektrischen Eigenschaften des Materials zumindest einer Schicht der Sensor-Schichtanordnung hervorgerufen wird. Gemäß der Erfindung besteht zumindest eine der Schichten der Sensor-Schichtanordnung aus einem Material, das bei einer durch den Energieeintrag hervorgerufenen Erwärmung der Schichtanordnung seine elektrische Leitfähigkeit bzw. seinen Leitwert ändert, wobei sich mittels dieser Leitfähigkeitsänderung auch die elektrischen Eigenschaften bzw. die mittels der Überwachungsvorrichtung überwachte elektrische Kenngröße der gesamten Schichtanordnung ändern.

Die Leitfähigkeitsänderung (oder Leitwertänderung) des Dielektrikums mit der Temperatur kann entweder irreversibel oder reversibel sein. Im letzteren Fall geht das Dielektrikum bei abnehmender Temperatur wieder in seinen ursprünglichen Zustand über, sodass das Vorhangelement bzw. die Sensor-Schichtanordnung nach einem Auslösen (d. h. nach einer einmal erfolgten Zustandsänderung des Dielektrikums) ohne aktive Reparaturmaßnahmen wieder verwendbar ist.
Gemäß einer weiteren Ausführung weist die Sensor-Schichtanordnung (mindestens) eine Schicht aus einem halbleitenden Material (z. B. dotiertem Silizium) auf; wobei das halbleitende Material gemäß der Erfindung eine Bandlücke aufweisen kann, die kleiner ist als die Energie der Photonen der zu erfassenden Laserstrahlung. Bei Auftreffen von Licht entsprechend hoher Photonenenergie auf einen Halbleiter erhöht sich die elektrische Leitfähigkeit desselben aufgrund des photoelektrischen Effekts. Es ist gemäß der Erfindung vorgesehen, mittels der Überwachungsvorrichtung die elektrische Leitfähigkeit der Schicht aus dem halbleitenden Material als elektrische Kenngröße der Sensor-Schichtanordnung zu erfassen und ein Auftreffen von Laserstrahlung darauf mittels der damit einhergehenden Erhöhung der Leitfähigkeit zu erfassen.

Gemäß einer Ausführung kann vorgesehen sein, zwischen der ersten und der zweiten Schicht (z. B. mittels der Überwachungsvorrichtung) eine elektrische Spannung anzulegen, wobei die Spannung so bemessen ist, dass bei unverformter Geometrie der Schichtanordnung der Stromfluss zwischen der ersten und der zweiten Schicht (im Wesentlichen) Null ist bzw. unterhalb eines vorgegebenen Strom-Schwellenwertes liegt. Ferner können gemäß dieser Ausführung die Materialien der ersten und der zweiten Schicht hinsichtlich ihrer thermischen (wie z. B. thermischer Ausdehnungskoeffizient, Schmelzpunkt) und geometrischen (wie z. B. Schichtdicke) Eigenschaften derart beschaffen sein, dass sich die Geometrie der Schichtanordnung bei Erwärmung durch (z. B. direkt auf die Schichtanordnung) auftreffendes Laserlicht derart ändert, dass bei verformter Geometrie nunmehr ein (oberhalb eines entsprechenden Strom-Schwellenwertes liegender) Stromfluss zwischen der ersten und der zweiten Schicht stattfindet, wobei die Änderung dieses Stromflusses bzw. die damit einhergehende Änderung des elektrischen Widerstandes zwischen der ersten und der zweiten Schicht (als elektrischer Kenngröße) von der Überwachungsvorrichtung erfasst und ausgewertet werden kann.
Es kann z. B. vorgesehen sein, dass die erste und die zweite Schicht derart beschaffen und angeordnet sind, dass sich bei einer Erwärmung (durch auf das Vorhangelement auftreffende Laserstrahlung) der Abstand zwischen ihnen aufgrund thermischen Verzugs verringert und z. B. (bei Erreichen eines vorgegebenen Energieeintrags bzw. einer vorgegebenen Temperatur) gänzlich aufgehoben wird; wobei die Änderung des Stromflusses zwischen den beiden Schichten z. B. (bei Unterschreiten eines durch die anliegende Spannung vorgegebenen Folienabstands) mittels Durchschlagens der zwischen ihnen anliegenden Spannung oder (unabhängig von dem Betrag der anliegenden Spannung) mittels Inkontakttretens der beiden Schichten erfolgen kann.

Die Erfindung wird nachfolgend anhand von Ausführungsbeispielen mit Bezug auf die beiliegenden Zeichnungen veranschaulicht, wobei gleiche oder ähnliche Merkmale mit gleichen Bezugszeichen versehen sind; hierbei zeigen schematisch:
- Fig. 1: eine Laserschutzvorrichtung gemäß einer Ausführungsform mit einem aufrollbaren Vorhangelement,
- Fig. 2A, B:: die Funktionsweise eines Vorhangelements unter Ausnutzung einer Leitfähigkeitsänderung einer dielektrischen Schicht,
- Fig. 3:: die Funktionsweise eines Vorhangelements unter Ausnutzung einer Leitfähigkeitsänderung einer halbleitenden Schicht,
- Fig. 4A, B:: die Funktionsweise eines Vorhangelements unter Ausnutzung einer Formänderung einer elektrisch leitfähigen Schicht,
- Fig. 5: ein Vorhangelement mit einer Streuschicht und einem Filter, und
- Fig. 6: eine Laserschutzvorrichtung mit einem anhebbaren Vorhangelement in Form eines Zeltes.

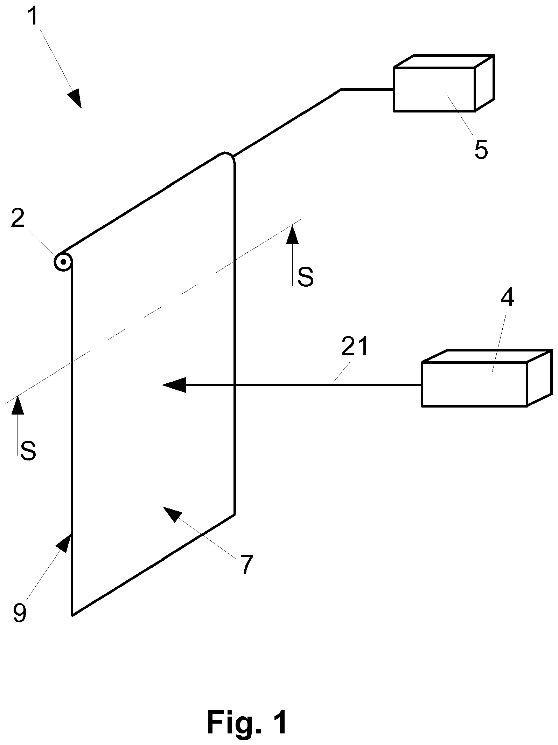

Gemäß Figur 1 weist eine Laserschutzvorrichtung 1 gemäß einer Ausführungsform ein flexibel verformbares Schutzelement in Form eines auf einer motorgetriebenen Welle 2 auf- und abrollbar angeordneten Vorhangelements bzw. Schutzvorhangs 3 und eine Überwachungsvorrichtung 5 auf. Der Vorhang 3 ist zum Erfassen von Laserstrahlung 21, welche von einer Laservorrichtung 4 emittiert wird, vorgesehen und weist eine (laserzugewandte) Innenseite 7 und eine (laserabgewandte) Außenseite 9 auf. Das Vorhangelement bzw. der Laserschutzvorhang 3 weist zum Erfassen von darauf auftreffender Laserstrahlung 21 eine Sensor-Schichtanordnung (in Fig. 1 nicht dargestellt) auf, wobei die Überwachungsvorrichtung 5 mit der Sensor-Schichtanordnung elektrisch verbunden ist und zum Erfassen und Überwachen der elektrischen Eigenschaften der Sensor-Schichtanordnung ausgebildet ist.

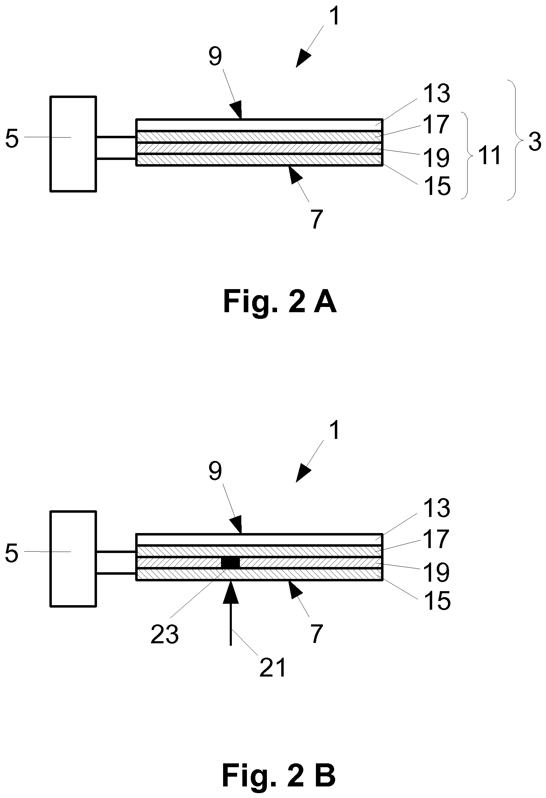

Die Figuren 2 A/B, 3, 4 A/B und 5 veranschaulichen unterschiedliche Ausgestaltungen des Vorhangelements 3 und dessen Sensor-Schichtanordnung, wobei jeweils ein Querschnitt senkrecht zur Fläche des Vorhangelements 3 (z. B. entlang der in Figur 1 veranschaulichten Schnittlinie S-S) dargestellt ist.

Gemäß den Figuren 2 A/B weist das Vorhangelement 3 eine Sensor-Schichtanordnung 11 und eine mechanische Schutzschicht 13 auf. Die Sensor-Schichtanordnung 11 besteht aus einer elektrisch leitfähigen ersten Schicht 15, einer elektrisch leitfähigen zweiten Schicht 17 und einer zwischen der ersten und der zweiten Schicht angeordneten (und dieselben kontaktierenden) dritten Schicht 19 aus einem dielektrischen bzw. elektrisch isolierenden Material. Jede der Schichten 15, 17, 19 - und somit auch die gesamte Sensor-Schichtanordnung 11 - erstreckt sich über die gesamte Fläche des Vorhangelements 3. Die mechanische Schutzschicht 13 fungiert als Trägerschicht für die Sensor-Schichtanordnung 11.

Die Überwachungsvorrichtung 5 ist mit der Sensor-Schichtanordnung 11 elektrisch verbunden und derart eingerichtet, dass von ihr die elektrische Leitfähigkeit zwischen der ersten Schicht 15 und der zweiten Schicht 17 (sowie deren Änderung) erfassbar ist, d. h. gemäß dieser Ausführung ist die mittels der Überwachungsvorrichtung 5 überwachte elektrische Kenngröße der Sensor-Schichtanordnung 11 durch die Leitfähigkeit zwischen der ersten Schicht 15 und der zweiten Schicht 17 gegeben. Mittels der Überwachungsvorrichtung 5 ist eine elektrische Spannung zwischen der ersten 15 und der zweiten 17 Schicht angelegt, wobei diese Spannung so bemessen ist, dass ohne Energieeintrag durch auftreffendes Laserlicht kein Stromfluss zwischen der ersten 15 und der zweiten Schicht 17 stattfindet. Das dielektrische Material der dritten Schicht 19 ist derart beschaffen, dass bei Überschreiten einer kritischen Temperatur infolge einer Erwärmung bei darauf auftreffendem Laserlicht 21 (siehe Fig. 2 B) an der Auftreffposition des Laserlichts 21 in einem Raumbereich 23 entweder seine elektrische Durchschlagsfestigkeit derart abnimmt, dass in diesem Bereich 23 ein Spannungsdurchschlag zwischen der ersten 15 und der zweiten 17 Schicht erfolgt, oder seine elektrische Leitfähigkeit derart zunimmt, dass nunmehr ein Stromfluss zwischen der ersten 15 und der zweiten 17 Schicht stattfindet.
Bei Auftreffen von Laserlicht 21 ändert sich somit die elektrische Kenngröße der Leitfähigkeit zwischen der ersten 15 und der zweiten 17 Schicht, und zwar mittels einer Änderung der elektrischen Eigenschaften (Durchschlagsfestigkeit bzw. Leitfähigkeit) des Materials der dritten Schicht 19 der Sensor-Schichtanordnung 11.
Die Überwachungsvorrichtung 5 ist ferner mit der die Laserstrahlung 21 emittierenden Laserlichtquelle 4 elektrisch verbunden (nicht dargestellt) und derart eingerichtet, dass von ihr die Laserlichtquelle 4 ausgeschaltet wird, sobald der Betrag der erfassten Änderung der elektrischen Leitfähigkeit (wobei dieser Betrag vorliegend - da ohne Energieeintrag durch Laserlicht die Leitfähigkeit im Wesentlichen Null ist - im Wesentlichen gleich der jeweils erfassten Leitfähigkeit ist) zwischen der ersten 15 und der zweiten 17 Schicht größer ist als ein vorgegebener Schwellenwert.

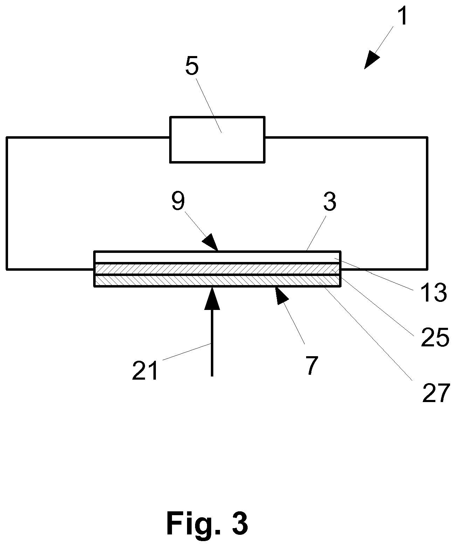

Figur 3 veranschaulicht eine Laserschutzvorrichtung 1 mit einem Vorhangelement 3 und einer Überwachungsvorrichtung 5. Gemäß Figur 3 weist das Vorhangelement 3 an seiner Außenseite 9 eine mechanische Schutzschicht 13 und an seiner Innenseite 7 eine Sensor-Schichtanordnung 11 und eine Streuschicht 27 auf, wobei die Sensor-Schichtanordnung 11 aus einer Schicht 25 aus einem elektrisch halbleitenden Material besteht und sich über die gesamte Fläche des Vorhangelements 3 erstreckt. Die Streuschicht 27 ist an der laserzugewandten Seite der halbleitenden Schicht 25 angeordnet und zum räumlichen Verteilen bzw.

Aufweiten von darauf auftreffendem Laserlicht 21 mittels optischer Streuung vorgesehen. Die Überwachungsvorrichtung 5 ist mit der halbleitenden Schicht 25 elektrisch verbunden und zum Erfassen der elektrischen Leitfähigkeit der Schicht 25 als elektrischer Kenngröße eingerichtet. Das Material der halbleitenden Schicht 25 ist derart beschaffen, dass seine Bandlücken-Energie kleiner ist als die Photonenenergie der zu erfassenden Laserstrahlung 21, sodass bei auftreffendem Laserlicht 21 aufgrund des photoelektrischen Effekts die elektrische Leitfähigkeit der halbleitenden Schicht 25 ansteigt, wobei diese Änderung der Leitfähigkeit (als elektrischer Kenngröße der Sensor-Schichtanordnung) von der Überwachungsvorrichtung 5 erfassbar und auswertbar ist.

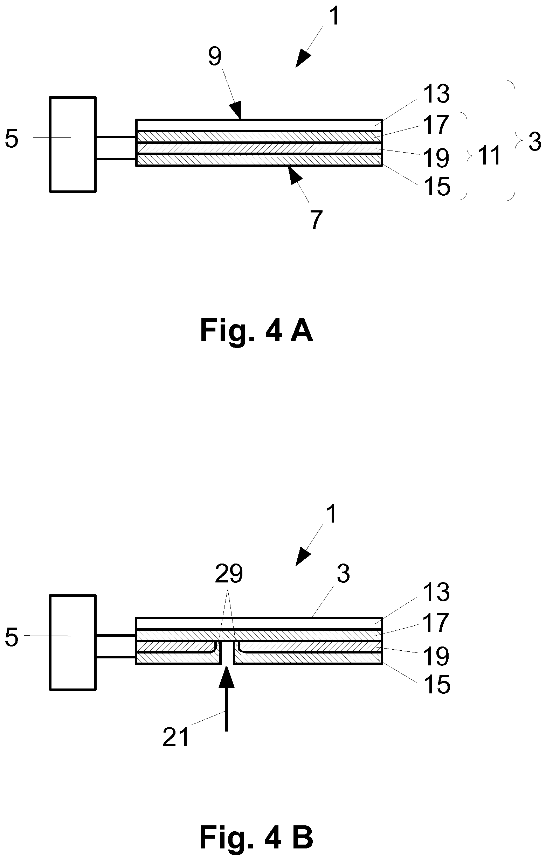

Die Figuren 4 A/B veranschaulichen eine Laserschutzvorrichtung 1 mit einem Vorhangelement 3 und einer Überwachungsvorrichtung 5. Gemäß den Figuren 4 A/B weist das Vorhangelement 3 eine Sensor-Schichtanordnung 11 und eine mechanische Schutzschicht 13 auf. Die Sensor-Schichtanordnung 11 erstreckt sich über die gesamte Fläche des Vorhangelements 3 und besteht aus einer elektrisch leitfähigen ersten Schicht 15, einer davon beabstandeten, elektrisch leitfähigen zweiten Schicht 17 und einer zwischen der ersten 15 und der zweiten Schicht 17 angeordneten (und dieselben kontaktierenden) dritten Schicht 19 aus einem dielektrischen Material. Die Überwachungsvorrichtung 5 ist mit der Sensor-Schichtanordnung 11 elektrisch verbunden und derart eingerichtet, dass von ihr die elektrische Leitfähigkeit zwischen der ersten Schicht 15 und der zweiten Schicht 17 erfassbar ist. Mittels der Überwachungsvorrichtung 5 ist eine elektrische Spannung zwischen der ersten 15 und der zweiten 17 Schicht angelegt, wobei diese Spannung so bemessen ist, dass ohne Energieeintrag durch auftreffendes Laserlicht kein Stromfluss zwischen der ersten Schicht 15 und der zweiten Schicht 17 stattfindet.
Die erste Schicht 15 ist derart beschaffen, dass sie beim Auftreffen der Laserstrahlung 21 (bei Erreichen eines vorgegebenen Energieeintrags bzw. ihrer Schmelztemperatur) durchgeschmolzen wird, wobei der Abstand zwischen der ersten 15 und der zweiten 17 Schicht durch die beim Durchschmelzen entstehenden Aufwürfe bzw. Schmelzränder 29 verringert oder - wie in Fig. 4B veranschaulicht - sogar gänzlich aufgehoben wird. Aufgrund der mit dem Durchschmelzen einhergehenden Formänderung der ersten Schicht 15 ändert sich die Geometrie der Sensor-Schichtanordnung 11, wobei gemäß Fig. 4B via die Schmelzränder 29 eine Kontaktierung der ersten 15 mit der zweiten 17 Schicht erfolgt. Aufgrund dieser Kontaktierung erfolgt nunmehr ein Stromfluss zwischen der ersten 15 und der zweiten 17 Schicht, sodass sich die Leitfähigkeit der Sensor-Schichtanordnung 11 gegenüber der in Fig. 4A veranschaulichten, unverformten Geometrie der Sensor-Schichtanordnung ändert und diese Änderung von der Überwachungsvorrichtung 5 erfasst und ausgewertet werden kann.

Gemäß den Figuren 4 A/B ändert sich somit bei Auftreffen von Laserlicht 21 die elektrische Kenngröße der Leitfähigkeit zwischen der ersten 15 und der zweiten 17 Schicht, und zwar mittels einer Formänderung der ersten Schicht 15 der Sensor-Schichtanordnung 11.

Aufgrund des Durchschmelzens der ersten Schicht 15 ändert sich sowohl deren Fläche (da an der durchschmolzenen Stelle ein Loch entsteht) als auch deren (minimaler) Abstand zu der zweiten Schicht 17 (da die Schmelzränder 29 sich von der ersten Schicht 15 in Richtung zu der zweiten Schicht 17 hin erstrecken). Durch diese Formänderungen ändert sich auch die Kapazität der Anordnung aus der ersten 15 und der zweiten 17 Schicht, wobei die Überwachungsvorrichtung 5 auch zum Überwachen und Auswerten dieser Kapazität als elektrischer Kenngröße eingerichtet sein kann.

Bei den Ausführungen gemäß den Figuren 2 A/B, 3 und 4 A/B trifft das Laserlicht 21 stets direkt auf die Sensor-Schichtanordnung 11. Es kann jedoch auch vorgesehen sein, die Vorhangelemente 3 zusätzlich zu der an der Außenseite 9 angeordneten (außenseitigen) mechanischen Schutzschicht 13 auch an ihrer Innenseite 7 mit einer entsprechenden (innenseitigen) mechanischen Schutzschicht bzw. Trägerschicht (nicht dargestellt) auszubilden. In diesem Fall würde bei den Ausführungen gemäß den Figuren 2 A/B und 4 A/B die Erwärmung der Sensor-Schichtanordnung 11 bei auf das Vorhangelement 3 auftreffender Laserstrahlung indirekt mittels thermischen Kontakts zwischen der innenseitigen mechanischen Schutzschicht und der Sensor-Schichtanordnung 11 erfolgen; bei der Ausführung gemäß Figur 3 wäre zudem ein Erfassen von auf das Vorhangelement 3 auftreffendem Laserlicht erst nach Durchschmelzen einer solchen innenseitigen mechanischen Schutzschicht möglich.

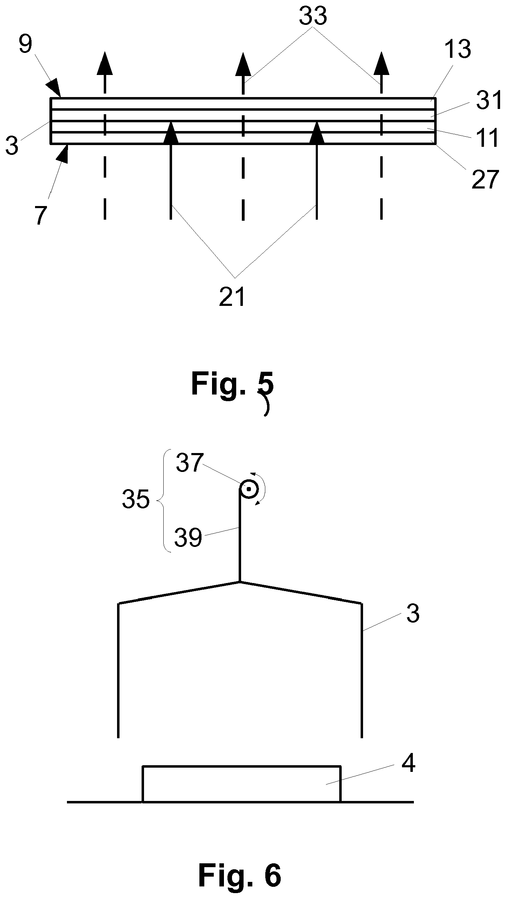

Figur 5 veranschaulicht ein Vorhangelement 3 mit einer Sensor-Schichtanordnung 11, einer mechanischen Schutzschicht bzw. Trägerschicht 13, einer Streuschicht 27 und einem Interferenzfilter 31. Die Streuschicht 27 ist an der laserzugewandten Seite der Sensor-Schichtanordnung 11 angeordnet. Das Interferenzfilter 31 ist an der laserabgewandten Seite der Sensor-Schichtanordnung 11 angeordnet. Das Interferenzfilter 31 besteht aus mehreren dünnen dielektrischen Folien (nicht dargestellt) und ist derart ausgebildet, dass es für die Wellenlänge der Laserstrahlung 21 undurchlässig ist und dieselbe somit herausfiltert (in Fig. 5 veranschaulicht durch die durchgezogen dargestellten Pfeile 21). Zudem ist das Vorhangelement 3 gemäß Figur 5 durch entsprechende Materialwahl der Schichten bzw. Lagen 11, 13, 27 und 31 des Vorhangelements 3 derart ausgebildet, dass es zumindest für einen Teil des Spektrums des sichtbaren Lichts 33 durchlässig ist (in Fig. 5 veranschaulicht durch die durch den Vorhang hindurchgehenden, gestrichelt dargestellten Pfeile 33). Somit ist mittels des Vorhangelements gemäß Fig. 5 ein Abschirmen der Laserstrahlung 21 bei gleichzeitiger Einsehbarkeit einer mittels des Vorhangs 3 abgeschirmten Laservorrichtung ermöglicht.

Figur 6 veranschaulicht in einer zweidimensionalen schematischen Darstellung eine Laserschutzvorrichtung 1 mit einem Vorhangelement 3 in Form eines nach allen seitlichen Richtungen und nach oben hin geschlossenen, jedoch nach unten hin offenen Zeltes. Das zeltartige Vorhangelement 3 ist mittels einer Hebevorrichtung 35 in Form einer motorgetriebenen Welle 37 und eines auf derselben auf- und abrollbaren Verbindungsmittels 39 (z. B. eines Seils) anhebbar, sodass bei angehobenem Vorhangelement 3 ein allseitiger Zugang zu einer Laservorrichtung 4, die bei abgesenktem Vorhangelement 3 von demselben umhüllt ist, ermöglicht ist.

### Liste der verwendeten Bezugszeichen

- 1: Laserschutzvorrichtung
- 2: motorgetriebene Welle / Aufrollvorrichtung
- 3: Vorhangelement
- 4: Laservorrichtung
- 5: Überwachungsvorrichtung
- 7: Vorhangelement-Innenseite
- 9: Vorhangelement-Außenseite
- 11: Sensor-Schichtanordnung
- 13: mechanische Schutzschicht / Trägerschicht
- 15: elektrisch leitfähige erste Schicht
- 17: elektrisch leitfähige zweite Schicht
- 19: dielektrische dritte Schicht
- 21: Laserlicht
- 23: Bereich mit veränderter Leitfähigkeit
- 25: halbleitende Schicht
- 27: Streuschicht
- 29: Schmelzränder
- 31: Interferenzfilter
- 33: sichtbares Licht
- 35: Hebevorrichtung
- 37: motorgetriebene Welle
- 39: Verbindungsmittel / Seil

## Patentansprüche

1. Laserschutzvorrichtung (1) zum Erfassen von Laserstrahlung (21), bestehend aus Photonen aufweisend:
- ein flexibles Vorhangelement (3), wobei das Vorhangelement eine Sensor-Schichtanordnung (11) mit einer Schicht (25) aus einem halbleitenden Material aufweist, **gekennzeichnet durch** :
- eine Überwachungsvorrichtung (5), die mit der Sensor-Schichtanordnung (11) verbunden ist,
- wobei die Bandlücke des halbleitenden Materials kleiner ist als die Energie der Photonen der zu erfassenden Laserstrahlung, wobei das Vorhangelement (3) derart ausgebildet ist, dass bei einem Auftreffen von Laserstrahlung (21) auf eine Innenseite (7) des Vorhangelements (3) die Photonen der Laserstrahlung direkt mit der Schicht (25) aus dem halbleitenden Material wechselwirken, und
- wobei von der Überwachungsvorrichtung ein Auftreffen der Laserstrahlung (21) auf die Schicht aus dem halbleitenden Material mittels Erfassens einer durch den photoelektrischen Effekt induzierten Änderung der elektrischen Leitfähigkeit der Schicht aus dem halbleitenden Material erfassbar ist.

2. Laserschutzvorrichtung nach Anspruch 1, **dadurch gekennzeichnet, dass** das Vorhangelement (3) ein aufrollbares Tor ist oder aus einer Anordnung mehrerer aufrollbarer Wände besteht.

3. Laserschutzvorrichtung nach Anspruch 1, **dadurch gekennzeichnet, dass** das Vorhangelement (3) insgesamt aufblasbar ist oder über aufblasbare Stützelemente verfügt.

4. Laserschutzvorrichtung nach einem der Ansprüche 1 bis 3, **dadurch gekennzeichnet, dass** die Überwachungsvorrichtung (5) mit dem die Laserstrahlung emittierenden Laser (4) verbunden ist und derart ausgebildet ist, dass von ihr der Laser ausgeschaltet wird, sobald der Betrag der erfassten Änderung der durch den photoelektrischen Effekt induzierten elektrischen Leitfähigkeit größer ist als ein vorgegebener Schwellenwert.

5. Laserschutzvorrichtung nach einem der Ansprüche 1 bis 4, **dadurch gekennzeichnet, dass** das Vorhangelement (3) in Form eines nach allen seitlichen Richtungen hin und/oder nach oben hin geschlossenen Zeltes ausgebildet ist.

6. Laserschutzvorrichtung nach einem der Ansprüche 1 bis 5, **dadurch gekennzeichnet, dass** sie ferner eine Hebevorrichtung (35) zum Anheben und Absenken des Vorhangelements (3) aufweist.

7. Laserschutzvorrichtung nach einem der Ansprüche 1 bis 5, **dadurch gekennzeichnet, dass** sie ferner eine Aufrollvorrichtung (2) zum Auf- und Abrollen des Vorhangelements (3) aufweist.

8. Laserschutzvorrichtung nach einem der Ansprüche 1 bis 7, **dadurch gekennzeichnet, dass** das Vorhangelement (3) derart ausgebildet ist, dass es für die Laserstrahlung (21) undurchlässig ist und zumindest für einen Teil des sichtbaren Lichtspektrums (33) durchlässig ist.

## Claims

1. A laser protection device (1) to detect laser radiation (21), the laser radiation (21) consisting of photons, the laser protection device having:
- a flexible curtain element (3) that has a sensor layer arrangement (11) with a layer (25) made of a semiconductor material, **characterized by**:
- a monitoring device (5) that is connected with the sensor layer arrangement (11);
- wherein the band gap of the semiconductor material is smaller than the energy of the photons of the laser radiation to be detected, the curtain element (3) being made so that when laser radiation (21) impinges on an inner surface (7) of the curtain element (3), the photons of the laser radiation directly interact with the layer (25) made of the semiconductor material; and
- wherein the monitoring device can detect impingement of the laser radiation (21) on the layer made of the semiconductor material by detecting a change in the electrical conductivity of the layer made of the semiconductor material, this change being induced by the photoelectric effect.

2. A laser protection device according to claim 1, **characterized in that** the curtain element (3) is a gate that can be rolled up or consists of an arrangement of multiple walls that can be rolled up.

3. A laser protection device according to claim 1, **characterized in that** the entire curtain element (3) is inflatable or has inflatable support elements.

4. A laser protection device according to any one of claims 1 through 3, **characterized in that** the monitoring device (5) is connected with the laser (4) emitting the laser radiation and is designed so that it turns the laser off as soon as the magnitude of the detected change in the electrical conductivity exceeds a specified threshold, this change being induced by the photoelectric effect.

5. A laser protection device according to any one of claims 1 through 4, **characterized in that** the curtain element (3) is in the form of a tent that is closed in all lateral directions and/or in the upward direction.

6. A laser protection device according to any one of claims 1 through 5, **characterized in that** it also has a lifting device (35) to raise and lower the curtain element (3).

7. A laser protection device according to any one of claims 1 through 5, **characterized in that** it also has a roll-up device (2) to roll up and unroll the curtain element (3).

8. A laser protection device according to any one of claims 1 through 7, **characterized in that** the curtain element (3) is designed so that it is impervious to laser radiation (21) and is pervious to at least part of the visible light spectrum (33).

## Revendications

1. Dispositif de protection anti-laser (1) permettant de détecter un rayonnement laser (21), constitué de photons, présentant :
- un élément de type rideau (3) souple, où l'élément de type rideau présente un ensemble de détection en couches (11) avec une couche (25) à base d'un matériau semi-conducteur, **caractérisé par** :
- un dispositif de surveillance (5), qui est relié avec l'ensemble de détection en couches (11),
- où la bande interdite du matériau semi-conducteur est inférieure à l'énergie des photons du rayonnement laser à détecter, où l'élément de type rideau (3) est conçu de telle manière que, lors de l'impact du rayonnement laser (21) sur une face intérieure (7) de l'élément de type rideau (3), les photons du rayonnement laser interagissent directement avec la couche (25) à base du matériau semi-conducteur, et
- où un impact du rayonnement laser (21) sur la couche à base du matériau semi-conducteur peut être détecté par le dispositif de surveillance au moyen de la détection d'une modification de la conductivité électrique de la couche à base de matériau semi-conducteur induite par l'effet photoélectrique.

2. Dispositif de protection anti-laser selon la revendication 1, **caractérisé en ce que** l'élément de type rideau (3) est une porte escamotable enroulable ou est constitué d'un agencement de cloisons escamotables enroulables.

3. Dispositif de protection anti-laser selon la revendication 1, **caractérisé en ce que** l'élément de type rideau (3) peut être complètement gonflé ou dispose d'éléments support gonflables.

4. Dispositif de protection anti-laser selon l'une des revendications 1 à 3, **caractérisé en ce que** le dispositif de surveillance (5) est relié avec le laser (4) émettant le rayonnement laser et est conçu de telle manière que le laser est arrêté par celui-ci dès que l'ampleur de la modification détectée de la conductivité électrique induite par l'effet photoélectrique est supérieure à une valeur de seuil prédéfinie.

5. Dispositif de protection anti-laser selon l'une des revendications 1 à 4, **caractérisé en ce que** l'élément de type rideau (3) est conçu sous la forme d'une tente fermée dans toutes les directions latérales et/ou vers le haut.

6. Dispositif de protection anti-laser selon l'une des revendications 1 à 5, **caractérisé en ce qu'**il présente en outre un dispositif de levage (35) pour lever et abaisser l'élément de type rideau (3).

7. Dispositif de protection anti-laser selon l'une des revendications 1 à 5, **caractérisé en ce qu'**il présente en outre un dispositif enrouleur (2) pour enrouler et dérouler l'élément de type rideau (3).

8. Dispositif de protection anti-laser selon l'une des revendications 1 à 7, **caractérisé en ce que** l'élément de type rideau (3) est conçu de telle manière qu'il est opaque pour le rayonnement laser (21) et est transparent pour au moins une partie du spectre de lumière visible (33).
